# FASCICULE DE BREVET EUROPEEN

(11) **EP 1 078 782 B1**
(45) Date de publication et mention de la délivrance du brevet: **23.04.2003**
(21) Numéro de dépôt: 00402071.5
(22) Date de dépôt: 20.07.2000
(51) Int. Cl.: B60G 3/26, B60G 7/00

(54) **Dispositif de suspension perfectionné pour une roue avant de véhicule automobile.**
Aufhängungsvorrichtung für das Vorderrad eines Kraftfahrzeuges
Suspension device for the front wheel of a motor car

(30) Priorité: 22.08.1999 FR 9911822
(43) Date de publication de la demande: 28.02.2001
(73) Titulaire: Peugeot Citroen Automobiles, 92200 Neuilly Sur Seine (FR)
(72) Inventeur: Galtier, Lucien, 91390 Morsang sur Orge (FR)
(74) Mandataire: De Cuenca, Emmanuel Jaime

(56) Documents cités:
- EP-A- 0 650 860
- DE-A- 4 232 136
- DE-C- 19 533 315
- FR-A- 1 185 602
- FR-A- 2 707 926
- US-A- 4 802 688
- PATENT ABSTRACTS OF JAPAN vol. 1999, no. 03, 31 mars 1999 (1999-03-31) & JP 10 315740 A (TOYOTA MOTOR CORP), 2 décembre 1998 (1998-12-02)
- PATENT ABSTRACTS OF JAPAN vol. 018, no. 576 (M-1697), 4 novembre 1994 (1994-11-04) & JP 06 211014 A (HONDA MOTOR CO LTD), 2 août 1994 (1994-08-02)

## Description

La présente invention concerne un dispositif de suspension selon le préambule de la revendication 1.

On connaît déjà dans l'état de la technique, notamment du brevet FR-A-2707926, un dispositif de suspension d'une roue avant directrice comportant une jante délimitant l'intérieur de la roue, le dispositif de suspension comprenant un pivot portant la roue, relié à une jambe sensiblement verticale par des moyens d'articulation autour d'un axe de pivotement de la roue, deux bras sensiblement horizontaux superposés articulés par leurs extrémités sur la jambe et le corps du véhicule, la jambe et les bras délimitant un quadrilatère de suspension déformable sensiblement vertical relié au corps du véhicule par un organe de suspension déformable élastiquement. La jambe forme un double arc qui délimite trois branches superposées s'étendant vers l'extérieur du quadrilatère de suspension, les branches inférieure et intermédiaire s'étendant à l'intérieur de la roue, la branche supérieure s'étendant à l'extérieur de la roue sensiblement au dessus de cette dernière, les moyens d'articulation du pivot comportant deux articulations portées respectivement par les branches inférieure et intermédiaire de la jambe, l'organe de suspension reliant le corps du véhicule et la jambe. Les extrémités libres et jointives des branches du bras supérieur sont articulées respectivement sur le corps du véhicule et sur la jambe. Les branches du bras inférieur sont sensiblement perpendiculaires entre elles, l'extrémité de jonction de ces deux branches et l'extrémité libre d'une première branche étant articulée sur le corps du véhicule, l'extrémité libre de la seconde branche étant articulée sur la branche inférieure de la jambe et comportant des moyens d'immobilisation en rotation de la jambe par rapport à l'axe passant par les extrémités articulées des branches inférieure et supérieure de cette jambe.

Un tel dispositif permet avantageusement de réduire par rapport aux dispositifs classiques, le déport entre l'axe d'articulation du pivot et le plan vertical médian de la roue, ceci sans encombrer l'espace moteur à l'avant du véhicule et sans soumettre la roue à des variations importantes de carrossage lorsque l'organe de suspension se déplace pour absorber les chocs.

L'invention à pour but de proposer un perfectionnement de ce type de dispositif afin d'améliorer le comportement et le confort.

A cet effet l'invention a pour objet un dispositif de suspension d'une roue avant directrice de véhicule automobile, du type cité au début de ce préambule, caractérisé en ce que la jambe est constituée d'une part d'une première partie réalisée à partir d'un tube cylindrique par exemple en acier constituant l'âme et les branches supérieure et inférieure de ladite jambe et d'autre part d'une seconde partie formée par un barreau transversal rendu solidaire de la première partie et constituant la branche intermédaire de la jambe et en ce que ladite première partie de la jambe est pourvue d'un orifice formant une entrée d'air au voisinage de la branche inférieure et une sortie d'air située au droit d'un disque de frein permettant ainsi d'utiliser la jambe comme écope de refroidissement dudit disque de frein.

Suivant des caractéristiques de différents modes de réalisation de l'invention :
- la première partie de la jambe a une forme à sections évolutives avec le premier et le second arc qui est obtenue par formage avec des procédés du type hydroformage ;
- la forme évolutive est constituée, en partant de la branche supérieure vers la branche inférieure de la jambe, d'une section rectangulaire large à l'extrémité de la branche supérieure qui évolue dans la courbe du premier arc en une section présentant la forme générale d'un « V » de manière à former deux ailes s'inscrivant autour du corps de l'organe de suspension, dans sa partie centrale, la section redevient rectangulaire puis évolue en largeur vers l'extrémité de la branche inférieure de la jambe, la courbe du second arc présente également une forme concave dirigée vers l'arrière du véhicule formant ainsi un « C », afin de constituer un passage pour un arbre de transmission relié de façon connue en soi à une fusée d'entraînement en rotation de la roue portée par le pivot ;
- le barreau est réalisé en alliage léger et est obtenu par découpe d'un profilé ;
- le profilé du barreau à une forme sensiblement parallélépipédique et est muni d'évidements destinés à réduire sont poids ;
- les deux bras formant respectivement un triangle inférieur et un triangle supérieur sont articulés sur la caisse et sur la jambe au moyen d'articulations élastiques d'axes horizontaux ;
- la branche supérieure est munie de chaque côté latéral d'un bourrelet interne réalisé par une déformation latérale de la paroi de la jambe afin de faire fluer la matière vers l'intérieur puis d'un perçage.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 est une vue en perspective, avec des arrachements d'un dispositif de suspension selon un premier mode de réalisation de l'invention ;
- la figure 2 est une vue de face, avec des arrachements, du dispositif de la figure 1 ;
- la figure 3 est une vue de côté suivant la flèche A de la figure 2 ;
- la figure 4 est une vue de détail de la partie cerclée B de la figure 2 illustrant une variante de réalisation de la liaison inférieure entre la jambe et le pivot ;
- la figure 5 est une vue de détail de la figure 3 montrant la liaison supérieure entre la jambe et le bras supérieur ;
- les figures 6 et 7 sont respectivement des sections de la jambe suivant la ligne VII-VII de la figure 2 et la ligne VIII-VIII de la figure 3; et
- la figure 8 est une vue similaire à la figure 1 d'un dispositif de suspension selon un second mode de réalisation de l'invention.

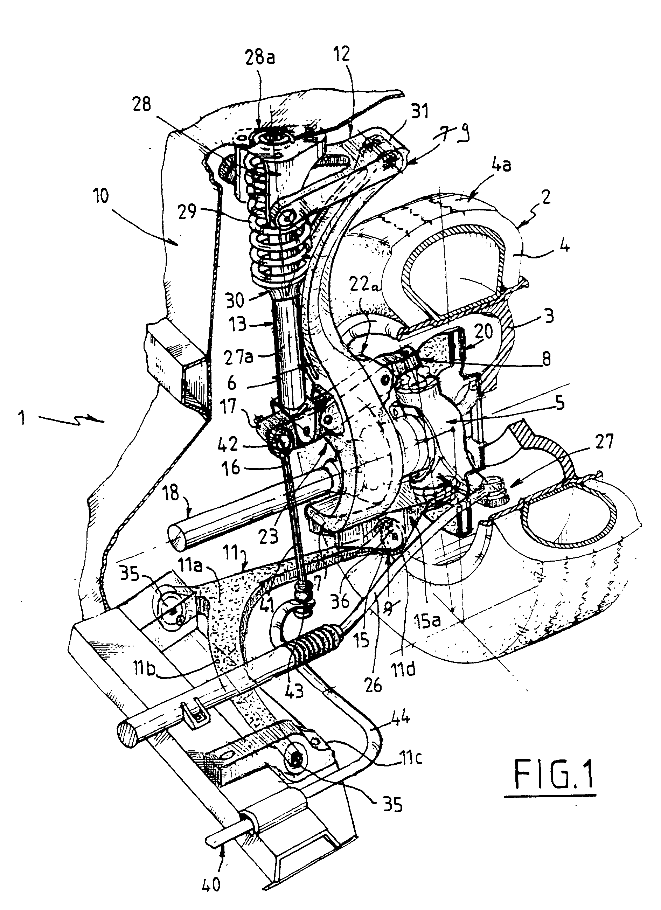

On a représenté aux figures 1 à 3 un dispositif de suspension 1 1 pour une roue avant 2 motrice et directrice d'un véhicule automobile, selon un premier mode de réalisation de l'invention.

De façon classique, la roue 2 comporte une jante 3, délimitant l'intérieur de la roue, autour de laquelle est fixé un pneumatique 4 muni d'une bande de roulement 4a délimitant la périphérie de la roue.

La roue 4 est fixée par des moyens connus, non représentés sur les figures, sur un pivot 5 articulé sur une jambe 6 et relié à la direction du véhicule.

La jambe 6 s'étend sensiblement verticalement et a une forme générale en double arc désigné dans la suite de la description premier 6a et second 6b arc de manière à délimiter trois branches 7, 8, 9 superposées. Les branches inférieure 7 et intermédiaire 8 délimitent une première extrémité de la jambe 6 s'étendant à l'intérieur de la roue 2, et la branche supérieure 9 délimite une seconde extrémité de la jambe 6 s'étendant à l'extérieur de la roue 2, sensiblement au dessus de cette dernière.

La jambe 6 est reliée au corps 10 du véhicule par deux bras 11, 12 sensiblement horizontaux superposés articulés par leurs extrémités sur la jambe 6 et le corps 10 du véhicule. La jambe 6 et les bras 11, 12 délimitent un quadrilatère déformable de suspension sensiblement vertical relié au corps 10 du véhicule par un organe de suspension 13 déformable élastiquement. Les côtés mobiles du quadrilatère pivotent entre eux autour d'axes sensiblement perpendiculaires au plan du quadrilatère.

On notera, que les branches 7 à 9 de la jambe 6 s'étendent vers l'extérieur du quadrilatère de suspension.

Cette jambe 6 est, selon la présente invention, constituée d'une part d'une première partie 16 réalisée à partir d'un tube cylindrique par exemple en acier constituant l'âme et les branches supérieure 9 et inférieure 7 de ladite jambe 6 et d'autre part d'une seconde partie 17 formée par un barreau transversal rendu solidaire de la première partie 16 et constituant la branche intermédiaire 8 de la jambe 6.

La première partie 16 a une forme à sections évolutives avec le premier 6a et le second 6b arc définie ci-dessus qui est obtenue par formage avec des procédés du type hydroformage.

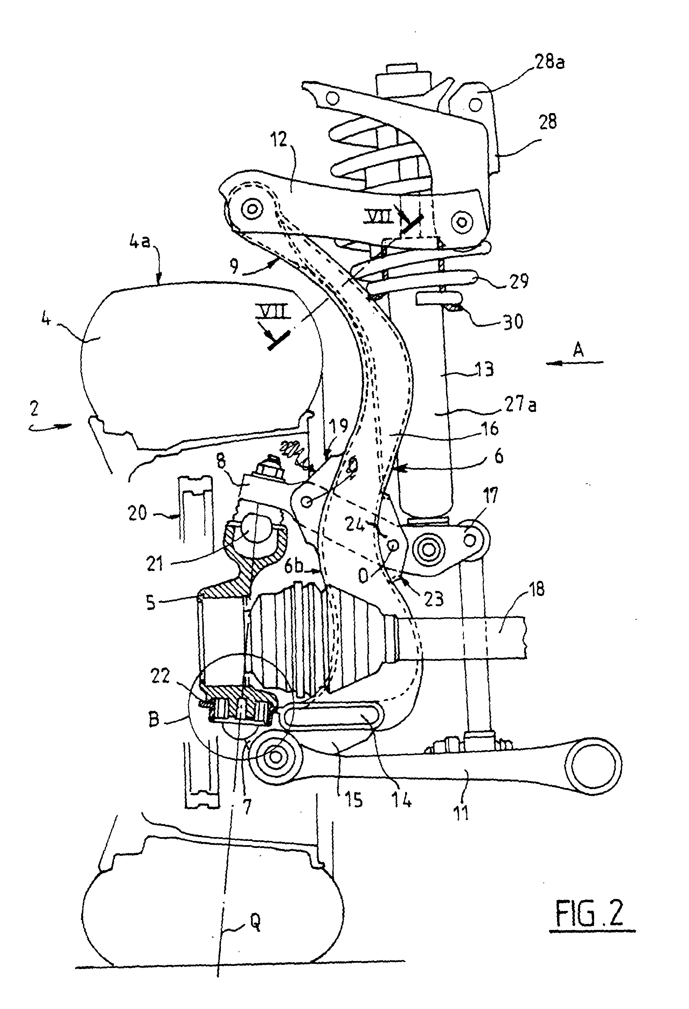

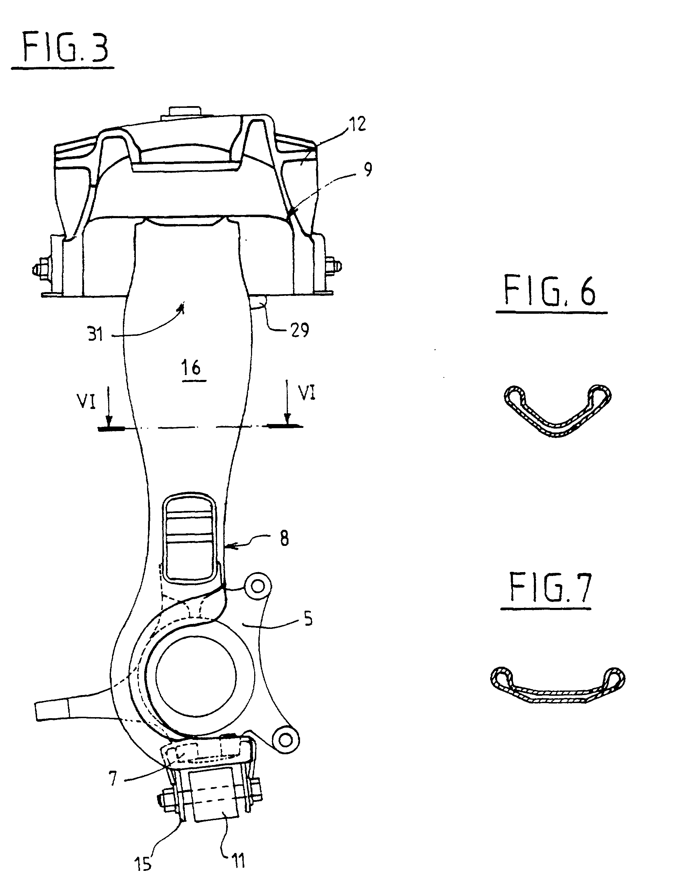

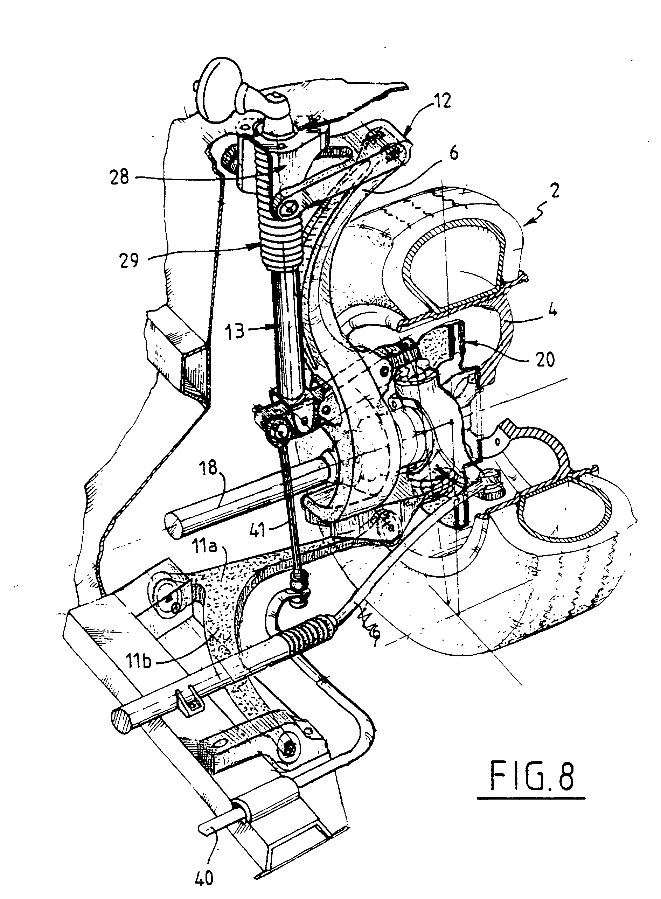

Cette forme évolutive est constituée, en partant de la branche supérieure 9 vers la branche inférieure 7 de la jambe 6, d'une section rectangulaire large à l'extrémité de la branche supérieure 9 qui évolue dans la courbe du premier arc 6a en une section présentant la forme générale d'un « V », comme visible sur les figures 6 et 7, de manière à former deux ailes s'inscrivant autour du corps de l'organe de suspension 13. Dans sa partie centrale, la section redevient rectangulaire puis évolue en largeur vers l'extrémité de la branche inférieure 7 de la jambe 6. La courbe du second arc 17 présente également une forme concave dirigée vers l'arrière du véhicule formant ainsi un « C », comme représenté sur les figures 2 et 3, afin de constituer un passage pour un arbre de transmission 18 relié de façon connue en soi à une fusée d'entraînement en rotation de la roue portée par le pivot 5.

La forme concave ou en « C » de ce second arc 17 présente à son extrémité libre, constituant en outre la branche inférieure 7 de la jambe 6, une ouverture oblongue 14 sensiblement horizontale et dirigée vers l'avant du véhicule, résultant de la déformation du tube.

Avantageusement, cette ouverture 14 constitue une entrée pour l'air afin d'amener celle-ci par circulation à l'intérieure de la première partie 16 de la jambe 6 jusqu'à une sortie 19 située au droit d'un disque de frein 20 rendu solidaire par des moyens connus au pivot 5. Un tel agencement dans la jambe 6 permet d'utiliser cette dernière comme écope pour le refroidissement du disque de frein 20.

Sous la branche inférieure 7 de la jambe 6 est soudée une chape 15 constituée de deux ailes disposées sensiblement parallèles à l'axe de roue et sur laquelle est articulé un bras 11 du triangle inférieur.

La chape 15 présente une partie saillante 15a dirigée vers le plan médian de roue dans laquelle est agencé un logement cylindrique afin de loger dans le creux du bol du disque de frein 20, l'articulation inférieure du pivot 5.

Le pivot 5 est articulé sur les extrémités des branches inférieure 7 et intermédiaire 8 de la jambe 6, au moyen d'une rotule 21 portée par la branche intermédiaire 8 et d'un roulement 22 porté par la partie saillante 15a de la branche inférieure 7, comme visible à la figure 2. La rotule 21 et le roulement 22 sont alignées entre eux suivant l'axe de pivotement Q de la roue.

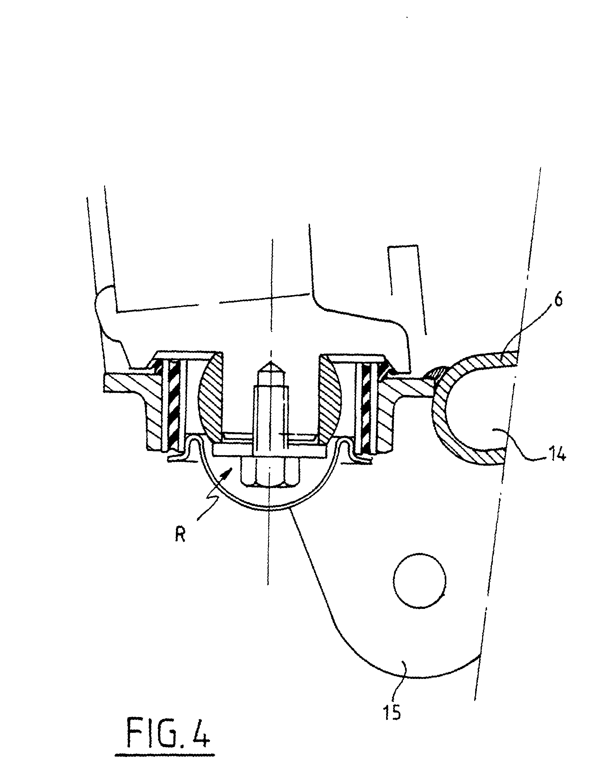

Selon un second mode de réalisation représenté à la figure 4, le pivot 5 est articulé sur l'extrémité de la branche inférieure au moyen d'une liaison rotule R, comme représenté sur la figure 4. La rotule ou le roulement est logée dans le creux du bol du disque de manière à réduire le déport de l'axe de pivotement par rapport au plan médian mesuré au centre de roue.

En partie supérieure du pivot, la rotule 21 est porteuse et peut donc être remplacée par une articulation cylindrique munie de butées axiales s'opposant aux charges exercées sensiblement verticalement sur le pivot 5 et la jambe 6 par l'organe de suspension 13.

La deuxième partie 17 de la jambe 6 est constituée, comme mentionné ci-dessus, d'un barreau transversal transmettant les efforts de suspension sur le pivot 5. Ce barreau traverse la première partie 16 par deux orifices sensiblement rectangulaires 22a, 23 réalisés en vis-à-vis. Chacun de ces orifices rectangulaires 22a, 23 est obtenu par découpe puis pliage des flancs de la première partie 16 de la jambe vers l'extérieur formant ainsi des ailes de support 24 pour le barreau. Chacune des ailes de support 24 est muni d'un orifice O destiné à être traversé par un moyen de fixation du type vis/écrou afin de rendre solidaire le barreau 17 à la première partie 16 de la jambe 6.

De manière avantageuse, le barreau 17 est réalisé en alliage léger et est obtenu par découpe d'un profilé. De façon à alléger, cette suspension, chaque profilé de forme parallélépipédique rectangulaire constituant le barreau est pourvu d'évidements.

Le pivot 5 est relié au moyen d'une biellette 26 à un mécanisme de direction de type connu, par exemple à crémaillère.

La biellette 26 est articulée sur une partie 27 formant levier du pivot 5 agencée de manière à obtenir des variations satisfaisantes de l'ouverture ou pincement de la roue 2 lors des déplacements de cette dernière par rapport au corps du véhicule.

De façon classique, le mécanisme de direction est commandé par un volant manoeuvré par le conducteur de manière à faire tourner le pivot 5 autour de l'axe matérialisé par les rotules ou rotule et roulement par l'intermédiaire de la biellette 26.

L'organe de suspension 13 comporte un amortisseur 27a, de type connu, muni d'un corps et d'une tige télescopique. Comme mentionné ci-dessus, de manière à réduire l'encombrement de l'organe de suspension 13 entre les roues 2 avant du véhicule, l'extrémité libre du corps est entourée par la jambe 6 et reliée à la branche intermédiaire 8 de la jambe 6 au moyen d'une articulation élastique. L'extrémité libre de la tige est reliée par une articulation élastique à un étrier 28 fixé, par exemple par boulonnage, sur le corps du véhicule.

L'organe de suspension 13 comporte en outre un ressort à boudin 29, coaxial à l'amortisseur 27, s'étendant entre deux sièges 30, 28a dont l'un est solidaire du corps de l'amortisseur 27 et l'autre de l'étrier 28 par l'intermédiaire de l'articulation élastique.

Le bras supérieur 12 comporte deux branches 12a, 12b délimitant un triangle, l'extrémité de jonction de ces branches étant reliée à la branche supérieure 9 de la jambe 6 au moyen d'une articulation élastique 31, et les extrémités libres des branches 12a, 12b étant reliées à deux flasques 32 correspondants de l'étrier 28 par des articulations élastiques 33.

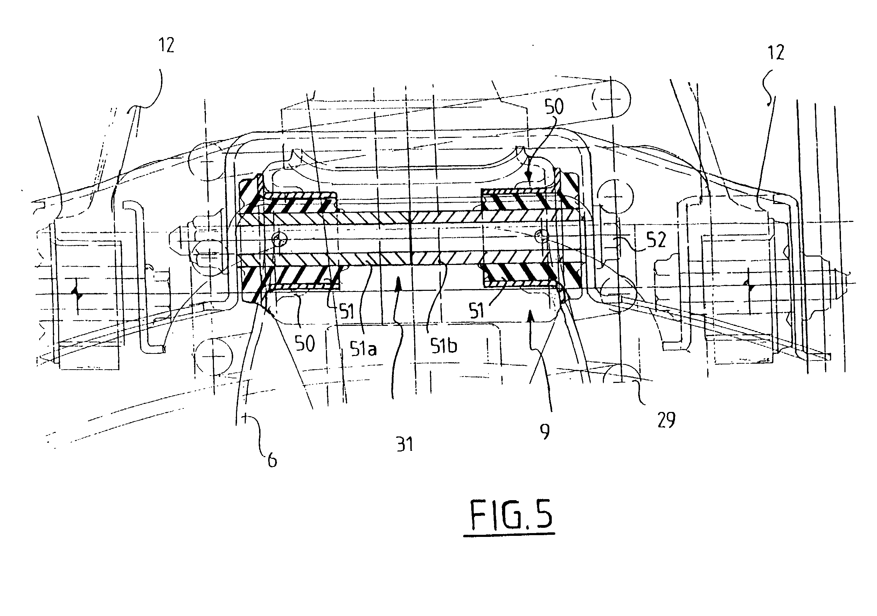

On a représenté à plus grande échelle, sur la figure 5, l'articulation élastique 31 de l'extrémité jointive reliée à la branche supérieure 9 sur laquelle avantageusement est réalisée par hydroformage une déformation latérale de l'extrémité supérieure 9 afin de faire fluer la matière vers l'intérieur puis un perçage permettant d'obtenir les bourrelets 50 de chaque côté de l'extrémité supérieure 9. L'articulation élastique 31 est constituée de deux manchons élastiques 51 disposé respectivement dans l'un des bourrelets 50, de deux entretoises 51a, 51b insérées en vis-à-vis à l'intérieur des manchons 51 et d'un goujon 52 destiné à solidariser l'ensemble extrémité supérieure, articulation et extrémité jointive.

Le bras inférieur 11 comporte deux branches 11a, 11b sensiblement perpendiculaires délimitant un triangle. L'extrémité de jonction des deux branches 11a, 11b et l'extrémité libre 11c d'une première branche 11a sont reliées au corps du véhicule par des articulations munies de manchons élastiques 35 d'articulation d'axes sensiblement horizontaux.

L'extrémité libre 11d de la seconde branche 11b est logée entre la chape 15 solidaire de la jambe 6 et est reliée à celle-ci par une articulation élastique 36 d'axe d'articulation sensiblement horizontal et parallèle aux axes d'articulations des articulations 35.

On a également représenté sur la figure 1 une tringlerie 40 anti-dévers comportant une biellette 41 munie d'une première extrémité 42 reliée au barreau transversal 17 de la jambe 6 par une articulation élastique montée au voisinage de l'articulation du corps de l'amortisseur 27, et d'une seconde extrémité 43 articulée avec une barre de torsion 44 disposée transversalement au véhicule.

Lorsque la roue 2 roule sur une chaussée, la jambe 6 transmet au pivot 5 et à la roue 2, d'une part, les efforts de suspension et d'amortissements exercés par l'organe de suspension et d'autre part, les variations de carrossage et de chasse au cours des déplacements de la roue par rapport au corps du véhicule.

On a représenté à la figure 8, un dispositif de suspension selon un second mode de réalisation de l'invention.

Sur cette figure, les éléments analogues à ceux des figures précédentes sont désignés par des références identiques.

Le dispositif diffère de celui représenté aux figures 1 à 3 en ce que l'organe de suspension 13 comporte un élément télescopique oléopneumatique relié à une sphère contenant un gaz sous pression agencée dans le prolongement de l'extrémité solidaire du corps de véhicule de l'organe de suspension.

L'élément oléopneumatique est du type connu et ne sera pas décrit plus en détail.

On notera que la suspension telle que réalisée permet d'avoir un excellent confort car aucune rotule qui engendre des frottements n'est présente sur les triangles inférieur et supérieur de sorte que la suspension est complètement découplée du pivot de la roue.

## Revendications

1. Dispositif de suspension (1) d'une roue avant (2) directrice comportant :
- une jante (3) délimitant l'intérieur de la roue,
- un pivot (5) portant la roue (2), relié à une jambe (6) sensiblement verticale par des moyens d'articulation autour d'un axe de pivotement de la roue,
- deux bras (11,12) sensiblement horizontaux superposés articulés par leurs extrémités sur la jambe (6) et le corps (10) du véhicule, la jambe (6) et les bras (11,12)délimitant un quadrilatère de suspension déformable sensiblement vertical, un organe de suspension reliant le corps (10) du véhicule et la jambe (6), la jambe (6) formant un double arc qui délimite trois branches (7,8,9) superposées s'étendant vers l'extérieur du quadrilatère de suspension, les branches inférieure (7) et intermédiaire (8) s'étendant à l'intérieur de la roue (2), la branche supérieure (9) s'étendant à l'extérieur de la roue (2) sensiblement au dessus de cette dernière, les moyens d'articulation du pivot comportant deux articulations portées respectivement par les branches inférieure (7) et intermédiaire (8) de la jambe (6), le bras inférieur (11) comportant deux branches (11a, 11b) qui sont sensiblement perpendiculaires entre elles, l'extrémité libre de ces deux branches (11a, 11b) étant articulées sur le corps (10) du véhicule, l'autre extrémité du bras inférieur (11) étant articulée sur la branche inférieure (7) de la jambe (6) et comportant des moyens d'immobilisation en rotation de la jambe (6) par rapport à l'axe passant par les extrémités articulées des branches inférieure (7) et supérieure (9) de cette jambe (6),
**caractérisé en ce que**
la jambe (6) est constituée d'une part d'une première partie (16) réalisée à partir d'un tube cylindrique par exemple en acier constituant l'âme et les branches supérieure (9) et inférieure (7) de ladite jambe (6) et d'autre part d'une seconde partie (17) formée par un barreau transversal rendu solidaire de la première partie (16) et constituant la branche intermédiaire (8) de la jambe (6) et **en ce que** ladite première partie (16) de la jambe (6) est pourvue d'un orifice formant une entrée d'air au voisinage de la branche inférieure et une sortie d'air située au droit d'un disque de frein permettant ainsi d'utiliser la jambe (6) comme écope de refroidissement dudit disque de frein.

2. Dispositif selon la revendication 1, **caractérisé en ce que** la première partie (16) de la jambe (6) a une forme à sections évolutives avec le premier (6a) et le second (6b) arc qui est obtenue par formage avec des procédés du type hydroformage.

3. Dispositif selon la revendication 2, **caractérisé en ce que** la forme évolutive est constituée, en partant de la branche supérieure (9) vers la branche inférieure (7) de la jambe (6), d'une section rectangulaire large à l'extrémité de la branche supérieure (9) qui évolue dans la courbe du premier arc (6a) en une section présentant la forme générale d'un « V » de manière à former deux ailes s'inscrivant autour du corps de l'organe de suspension (13), dans sa partie centrale, la section redevient rectangulaire puis évolue en largeur vers l'extrémité de la branche inférieure (7) de la jambe (6), la courbe du second arc (17) présente également une forme concave dirigée vers l'arrière du véhicule formant ainsi un « C », afin de constituer un passage pour un arbre de transmission (18) relié de façon connue en soi à une fusée d'entraînement en rotation de la roue portée par le pivot (5).

4. Dispositif selon l'une quelconque des revendications précédentes, **caractérisé en ce que** le barreau (17) est réalisé en alliage léger et est obtenu par découpe d'un profilé.

5. Dispositif selon la revendication 4, **caractérisé en ce que** le profilé du barreau (17) à une forme sensiblement parallélépipédique et est muni d'évidements destinés à réduire sont poids.

6. Dispositif selon l'une quelconque des revendications précédentes, **caractérisé en ce que** les deux bras (11, 12) formant respectivement un triangle inférieur et un triangle supérieur sont articulés sur la caisse et sur la jambe (6) au moyen d'articulations élastiques d'axes horizontaux.

7. Dispositif selon l'une quelconque des revendications précédentes, **caractérisé en ce que** la branche supérieure (9) est munie de chaque côté latéral d'un bourrelet (50) interne réalisé par une déformation latérale de la paroi de la jambe (6) afin de faire fluer la matière vers l'intérieur puis d'un perçage.

## Patentansprüche

1. Aufhängungsvorrichtung (1) eines Vorderrads (2) mit
- einer Felge (3), die das Innere des Rads festlegt,
- einem Bolzen (5), der das Rad (2) trägt und mit einem im Wesentlichen vertikalen Bein (6) über Gelenkmittel um eine Schwenkachse des Rads verbunden ist,
- zwei übereinander angeordneten, im Wesentlichen horizontalen Armen (11,12), die an ihren Enden am Bein (6) und am Fahrzeuggehäuse (10) angelenkt sind, wobei das Bein (6) und die Arme (11, 12) ein im Wesentlichen vertikales, verformbares Aufhängungs-Viereck festlegen, wobei ein Aufhängungsorgan das Fahrzeuggehäuse (10) und das Bein (6) verbindet, wobei das Bein (6) einen zweifachen Bogen bildet, der drei übereinander angeordnete Zweige (7, 8, 9) festlegt, die sich aus dem Aufhängungs-Viereck hinaus erstrecken, wobei sich der untere (7) und mittlere Zweig (8) im Inneren des Rads (2) und der obere Zweig (9) außerhalb im Wesentlichen über diesem erstrecken, wobei die Gelenkmittel des Bolzens zwei von dem unteren (7) beziehungsweise mittleren Zweig (8) des Beins (6) getragene Gelenke aufweisen, wobei der untere Arm (11) zwei Zweige (11a, 11b) aufweist, die im Wesentlichen senkrecht zueinander sind, wobei die freien Enden der beiden Zweige (11a, 11b) am Fahrzeuggehäuse (10) angelenkt sind, wobei das andere Ende des unteren Arms (11) am unteren Zweig (7) des Beins (6) angelenkt ist und Mittel aufweist, die das Bein (6) gegenüber der Achse, die durch die angelenkten Enden des unteren (7) und oberen Zweigs (9) des Beins (6) verläuft, in der Drehung blockieren
**dadurch gekennzeichnet, dass** das Bein (6) zum einen aus einem ersten Abschnitt (16) aus einem zylindrischen Rohr beispielsweise aus Stahl, der die Seele und den oberen (9) und unteren Zweig (7) des Beins (6) bildet, und zum anderen aus einem zweiten Abschnitt (17) besteht, der von einem Querstrab gebildet wird, der mit dem ersten Abschnitt (16) fest verbunden ist und den mittleren Zweig (8) des Beins (6) bildet, und dadurch, dass der erste Abschnitt (16) des Beins (6) mit einer Öffnung versehen ist, die einen Lufteingang in der Nähe des unteren Zweigs und einen Luftausgang senkrecht zu einer Bremsscheibe bildet, was es ermöglicht, die Bremsscheibe über das Bein (6) zu kühlen.

2. Vorrichtung nach Anspruch 1, **dadurch gekennzeichnet, dass** der erste Abschnitt (16) des Beins (6) eine Form mit Evolutivquerschnitten mit dem ersten (6a) und zweiten Bogen (6b) besitzt, die durch Hydroforming-Prozesse erhalten wird.

3. Vorrichtung nach Anspruch 2, **dadurch gekennzeichnet, dass** die Evolutivform ausgehend vom oberen (9) zum unteren Zweig (7) des Beins (6) hin aus einem breiten rechteckigen Querschnitt am Ende des oberen Zweigs (9) gebildet wird, der sich in der Kurve des ersten Bogens (6a) in einen im Wesentlichen V-förmigen Querschnitt entwickelt, sodass zwei Flügel um das Gehäuse des Aufhängungsorgans (13) gebildet werden, wobei der Querschnitt in der Mitte wieder rechteckig wird und sich dann in der Breite zum Ende des unteren Zweigs (7) des Beins (6) hin entwickelt, wobei die Kurve des zweiten Bogens (17) ebenfalls eine zum hinteren Teil des Fahrzeugs gerichtete konkave Form aufweist und so ein "C" formt, um einen Durchgang für eine Transmissionswelle (18) zu bilden, die auf an sich bekannte Art mit einem Drehantriebsschenkel des vom Bolzen (5) getragenen Rads verbunden ist.

4. Vorrichtung nach einem der vorhergehenden Ansprüche, **dadurch gekennzeichnet, dass** der Stab (17) aus Leichtmetalllegierung besteht und aus einem Profil ausgeschnitten wird.

5. Vorrichtung nach Anspruch 4, **dadurch gekennzeichnet, dass** das Profil des Stabs (17) im Wesentlichen die Form eines Parallelepipeds besitzt und mit Aussparungen versehen ist, damit er weniger wiegt.

6. Vorrichtung nach einem der vorhergehenden Ansprüche, **dadurch gekennzeichnet, dass** die beiden Arme (11, 12), die ein unteres beziehungsweise ein oberes Dreieck bilden, mittels elastischer Gelenke mit horizontalen Achsen am Gehäuse und am Bein (6) angelenkt sind.

7. Vorrichtung nach einem der vorhergehenden Ansprüche, **dadurch gekennzeichnet, dass** der obere Zweig (9) auf jeder Seite mit einem inneren Wulst (50), der von einer seitlichen Verformung der Wand des Beins (6) gebildet wird, damit das Material nach innen fließt, und dann mit einer Bohrung versehen ist.

## Claims

1. Suspension device (1) for a steering front wheel (2) comprising:
- a rim (3) delimiting the interior of the wheel,
- a pivot (5) carrying the wheel (2), connected to a substantially vertical strut (6) by articulation means about a pivotal axis of the wheel,
- two substantially horizontal, superimposed arms (11, 12) articulated by their ends to the strut (6) and the body (10) of the vehicle, the strut (6) and the arms (11, 12) delimiting a substantially vertical, deformable suspension quadrangle, a suspension unit connecting the body (10) of the vehicle and the strut (6), the strut (6) forming a double arc that delimits three superimposed branches (7, 8, 9) extending towards the outside of the suspension quadrangle, the lower (7) and intermediate (8) branches extending towards the inside of the wheel (2), the upper branch (9) extending outside the wheel (2) substantially above the latter, the articulation means of the pivot comprising two articulations carried respectively by the lower (7) and intermediate (8) branches of the strut (6), the lower arm (11) comprising two branches (11a, 11b), which are substantially perpendicular to each other, the free end of these two branches (11a, 11b) being articulated to the body (10) of the vehicle, the other end of the lower branch (11) being articulated to the lower branch (7) of the strut (6) and comprising means for immobilising the strut (6) in rotation relative to the axis passing through the articulated ends of the lower (7) and upper (9) branches of this strut (6),
**characterised in that**
the strut (6) is constituted, on the one hand, by a first part (16) made from a cylindrical tube, for example of steel, constituting the core and the upper (9) and lower (7) branches of said strut (6) and, on the other hand, by a second part (17) formed by a transverse bar made integral with the first part (16) and constituting the intermediate branch (8) of the strut (6) and **in that** said first part (16) of the strut (6) is provided with an orifice forming an air inlet in the vicinity of the lower branch and an air outlet located in line with a brake disc thus making it possible to use the strut (6) as a cooling scoop for said brake disc.

2. Device according to Claim 1, **characterised in that** the first part (16) of the strut (6) has a shape with evolving sections with the first (6a) and the second (6b) arc, which shape is obtained by forming with methods of the hydro-processing type.

3. Device according to Claim 2, **characterised in that** the evolving shape is constituted, starting from the upper branch (9) and going towards the lower branch (7) of the strut (6), by a wide rectangular section at the end of the upper branch (9), which evolves within the curve of the first arc (6a) into a generally V-shaped section so as to form two wings lying around the body of the suspension unit (13), in its central part, the section becomes rectangular again then evolves widthwise towards the end of the lower branch (7) of the strut (6), the curve of the second arc (17) also has a concave shape pointing towards the rear of the vehicle thus forming a C-shape, so as to constitute a passage for a drive shaft (18) connected in a manner known *per* se to a stub axle for driving in rotation the wheel carried by the pivot (5).

4. Device according to any one of the preceding claims, **characterised in that** the bar (17) is made of light alloy and is obtained by cutting a profile.

5. Device according to Claim 4, **characterised in that** the profile of the bar (17) is substantially parallelepipedal in shape and is provided with cavities intended to reduce its weight.

6. Device according to any one of the preceding claims, **characterised in that** the two arms (11, 12) forming a lower triangle and an upper triangle respectively are articulated to the body and to the strut (6) by means of resilient articulations with horizontal axes.

7. Device according to any one of the preceding claims, **characterised in that** the upper branch (9) is provided on each lateral side with an inner bead (50) produced by lateral deformation of the wall of the strut (6) in order to cause the material to creep inwards, then by drilling.
